# EUROPEAN PATENT APPLICATION

(11) **EP 2 327 663 A1**
(43) Date of publication of application: **01.06.2011**
(21) Application number: 09252639.1
(22) Date of filing: 17.11.2009
(51) Int. Cl.: C01G 23/00, C01G 23/053

(54) **Titanium oxide powder, dispersion thereof, and method of preparing the same**

(71) Applicant: Shin-Etsu Chemical Co., Ltd., Tokyo (JP)
(72) Inventor: Kaneyoshi, Masami, Chiyoda-ku, Tokyo (JP)
(74) Representative: Stoner, Gerard Patrick

(57) **Abstract**

A titanium oxide powder containing 0.2 to 25% by weight of niobium or tantalum is provided. The titanium oxide powder has a diffuse reflectance spectrum such that the reflectance at the wavelength at which the reflectance is maximum in the visible range is at least 50%, and the reflectance in infrared range of 1000 to 2500 nm is equal to or less than half of the maximum reflectance of the visible range. The present invention is capable of producing a titanium oxide fine particle powder as well as its dispersion having infrared cutoff property which can be used in producing an infrared cutoff film, transparent heat blocking film, and the like. The powder contains inexpensive harmless titanium oxide as its main component.

## Description

### BACKGROUND OF THE INVENTION

This invention relates to a titanium oxide powder having infrared cutoff property, dispersion thereof, and a method for preparing such titanium oxide powder.

Coating the surface of a glass or the like with a material that permits passing of visible light but blocks the infrared light has been attracting attention because the energy saving effect can be realized by the heat blockage. For example, JP-A 7-70482 and JP-A 8-176475 propose a coating composition comprising a dispersion of a fine particle powder of ITO (Indium Tin Oxide).

However, indium is a rare metal, and questions remain as to whether such materials can be stably supplied in the years to come in view of the resource limitation.

On the other hand, titanium oxide is an inexpensive harmless substance which is widely used for pigments and the like. Its use for photocatalysis has become a focus of attention, and JP-A 9-175821, JP-A 2001-262007, and JP-A 2007-176753 disclose production methods of the titanium oxide fine particle powder and its dispersion.

However, ordinary titanium oxide only has the property of blocking the ultraviolet light by absorption, and it allows penetration of the infrared light, and especially, the infrared light having a wavelength near the visible light in the range of up to 2500 nm as in the case of the visible light.

### SUMMARY OF THE INVENTION

The present invention has been completed in view of such situation, and an object of the present invention is to provide a titanium oxide fine particle powder containing the inexpensive titanium oxide as its main component and having infrared cutoff property. Another object of the present invention is to provide a dispersion as well as a production method of such titanium oxide fine particle powder.

The inventors of the present invention made an intensive study to realize the objects as described above, and found that when a solution or dispersion of a tetravalent titanium compound and a solution or dispersion of a pentavalent niobium or tantalum compound are mixed in the presence of a water-soluble reducing agent such as a water-soluble compound of trivalent titanium, and the mixture is heated to a temperature of 100 to 250°C, a titanium oxide powder having infrared cutoff property containing at least 0.2% by weight and up to 25% by weight of niobium or tantalum is produced and that the powder has a diffuse reflectance spectrum such that the reflectance at the wavelength at which the reflectance is maximum in the visible range is at least 50%, and the reflectance in infrared range of 1000 to 2500 nm is equal to or less than half of the maximum reflectance of the visible range. The present invention has been completed on the basis of such finding.

Accordingly, the present invention provides a titanium oxide powder containing 0.2 to 25% by weight of niobium or tantalum, the powder having a diffuse reflectance spectrum such that the reflectance at the wavelength at which the reflectance is maximum in the visible range is at least 50%, and the reflectance in infrared range of 1000 to 2500 nm is equal to or less than half of the maximum reflectance of the visible range.

Preferably, the titanium oxide powder may have an average particle size measured by centrifugation of up to 150 nm.

The present invention also provides a dispersion of such titanium oxide powder in water or an organic solvent.

The present invention also provides a method for preparing such titanium oxide powder. The method comprises the steps of mixing a solution or dispersion of tetravalent titanium compound, a solution or dispersion of pentavalent niobium or tantalum compound, and a water-soluble reducing agent, and heating the mixture to a temperature of 100 to 250°C.

In this case, the water-soluble reducing agent is preferably a water-soluble compound of trivalent titanium.

The present invention is capable of producing a titanium oxide fine particle powder as well as its dispersion having infrared cutoff property which can be used in producing an infrared cutoff film, transparent heat blocking film, and the like. The powder contains inexpensive harmless titanium oxide as its main component.

### BRIEF DESCRIPTION OF THE DRAWINGS

FIG. 1 is a view showing diffuse reflectance spectrum of the titanium oxide powder prepared in Examples and Comparative Example.
FIG. 2 is a view showing the results of particle size distribution evaluation for the titanium oxide powder dispersion prepared in Example 2.

### DETAILED DESCRIPTION OF THE INVENTION

Next, the titanium oxide powder of the present invention is described in detail.

The titanium oxide fine particle powder of the present invention contains at least 0.2% by weight and up to 25% by weight of niobium or tantalum, and 99.8 to 75% by weight of the titanium oxide which is the main component. More preferably, the content of niobium is at least 0.5% by weight and up to 12% by weight, and the content of tantalum is at least 1% by weight and up to 15% by weight. When the content of the niobium or the tantalum is less than such range, the desired infrared shielding performance is not realized, while inclusion of the niobium or the tantalum beyond such range may result in the reduced transmittance of the visible light, which is inconvenient for the object of the present invention, namely, production of a transparent infrared cutoff film.

Content of the elements other than the titanium, niobium, tantalum, and oxygen is preferably up to 1% by weight, and more preferably, the titanium oxide fine particle powder is substantially free from such elements.

As described above, the characteristic property of the titanium oxide fine particle powder of the present invention is that it permits passing of the visible light (360 nm to 830 nm) while it blocks the infrared light, and this property corresponds to the diffuse reflectance spectrum of the powder such that the maximum reflectance of the visible range is at least 50%, and the reflectance is equal to or less than half of the maximum reflectance of the visible range throughout the entire infrared range of 1000 to 2500 nm. Preferably, the maximum reflectance of the visible range is at least 60%, and the reflectance in the infrared range is up to 30%. Exemplary diffuse reflectance spectrum is described in the Examples.

In the present invention, the average particle size measured by centrifugation of the titanium oxide fine particle powder in its dispersion is up to 150 nm, and more preferably, up to 100 nm. Exemplary particle size distribution is described in the Examples. The lower limit is typically at least 5 nm, and in particular, at least 10 nm.

The titanium oxide used as a starting material for producing the titanium oxide fine particle powder of the present invention may have at least one crystalline phase or combination of two or more of crystalline phases selected from known rutile, anatase, and brookite.

In the method for producing the titanium oxide powder of the present invention, the following (1) to (3) are used for the starting materials.
(1) a starting material for the tetravalent titanium compound:
   an aqueous solution of a water-soluble compound such as TiCl₄ or Ti(SO₄)₂, or a solution or a transparent colloidal solution of amorphous titanium (IV) oxide or titanium (IV) hydroxide in an inorganic or organic acid (such as hydrochloric acid, oxalic acid, or acetic acid) or an alkali (such as NaOH or N(CH₃)₄OH);
(2) a starting material for the pentavalent niobium or tantalum compound:
   an aqueous solution of a water-soluble compound such as NbCl₅, TaCl₅, NbF₅. or TaF₅. or a solution or a transparent colloidal solution of amorphous niobium (V) oxide, tantalum (V) oxide, niobium (V) hydroxide, or tantalum (V) hydroxide in an inorganic or organic acid (such as hydrochloric acid, oxalic acid, or acetic acid) or an alkali (such as NaOH, or N(CH₃)₄OH); and
(3) a water-soluble reducing agent such as a water-soluble compound of trivalent titanium such as TiCl₃ (other examples of the reducing agents include SnCl₂, formaldehyde, sugar, and hydrazine).

These starting materials and optional components such as an acid, an alkali, a small amount of water-soluble organic solvent such as ethanol, or water are mixed to obtain reaction stock solution.

The components are preferably used so that total of Ti and Nb or Ta is in the range of at least 0.01 mol/cm³ and up to 2 mol/cm³. Use of such components at a concentration below than such range is not preferable since productivity will be insufficient and a large pressure vessel will be required. Also, use of such components at a concentration in excess of than such range is not preferable in view of the safety because pressure of the reaction system in the subsequent reaction at an elevated temperature may excessively increase due to the byproduct. More preferably, total of Ti and Nb or Ta is in the range of at least 0.05 mol/cm³ and up to 1 mol/cm³ The ratio of the titanium to the niobium or tantalum may be adequately selected depending on the ratio in the resulting product.

The reaction stock solution is heated to a temperature of at least 100°C and up to 250°C in a sealed vessel or a pressure vessel. When heated at a temperature of less than 100°C, the resulting titanium oxide composition will suffer from insufficient infrared cutoff property, while heating to a temperature in excess of 250°C may result in the difficulty of selecting and designing the vessel. More preferably, the reaction stock solution is heated at a temperature of at least 120°C and up to 200°C. The vessel may be any sealed vessel or pressure vessel as long as it has a structure capable of enduring the pressure of the steam generated during the heating of the aqueous solution to a temperature in excess of 100°C and it is capable of enclosing the steam and preventing vaporization of the solution. More preferably, the vessel is capable of enduring the pressure of at least 0.5 MPa.

Preferably, the reaction stock solution is heated for at least 10 minutes and up to 40 hours. Heating for a shorter period will result in an insufficient reaction, and the desired infrared cutoff property will not be realized. Heating for an excessive period may result in excessively coarse particle size. More preferably, the reaction stock solution is heated for at least 1 hour and up to 20 hours.

The reaction solution after the reaction at the elevated temperature and cooling may be used as a dispersion without modification. However, the reaction solution is generally treated to remove the soluble components in the reaction solution, for example, by preparing a cake by centrifugation or filtration through Buchner funnel followed by optional washing, or by placing in a cellophane membrane and dialyzing the solution against the exterior pure water. When dry powder is to be produced, the cake may be dried (in an air oven or a vacuum oven or the like) and the dried cake may be pulverized in a mortar or the like.

When dispersion is to be produced, the dispersion may be produced by redispersing the dried powder. However, the cake before drying may be dispersed in water or an organic solvent such as ethanol. The cake may also be pulverized in a ball mill, beads mill, ultrasound homogenizer, or the like for pulverization into finer particles.

The dispersion may have a solid content of at least 0.5% by weight and up to 50% by weight. When the solid content is less than 0.5% by weight, the dispersion needs to be coated over and over to realize the sufficient infrared cutoff property. On the other hand, dispersion as well as coating of the dispersion will be difficult since the viscosity of the dispersion is too high at the solid content in excess of 50% by weight. More preferably, the solid content is at least 1% by weight and up to 25% by weight.

### EXAMPLES

Here, the present invention is described in further detail by referring to the following Examples and Comparative Example, which by no means limit the scope of the present invention. Various modifications of the present invention may occur to those skilled in the art without deviating from the scope of the present invention.

### Example 1

19.74 g of titanium (IV) chloride solution (Wako Pure Chemical Industries, Ltd., a Ti content of 16% by weight) and 3.20 g of titanium (III) chloride solution (Wako Pure Chemical Industries, Ltd., a TiCl₃ content of 19% by weight) were mixed with 80 cm³ of pure water for dissolution. In the meanwhile, 0.54 g of niobium (V) chloride (Mitsuwa Chemicals Co., Ltd., a purity of 99.9%) was dissolved by adding 2 cm³ of pure water and 0.2 cm³ of concentrated hydrochloric acid in an ice bath. This solution was added to the preliminarily prepared titanium solution. The resulting solution was divided in half, and each half was placed in a Teflon^{™} inner cylinder (about 55 cm³) of a stainless steel pressure vessel with screw cap, and the cap of the outer vessel was tightly screwed up. The vessel was placed in an oven heated to 160°C for 12 hours, and the heating was stopped to allow for natural cooling.

After the cooling, the reaction product including the precipitation was collected. The reaction product was subjected to centrifugation, and after removing the supernatant, about 100 cm³ of pure water was added for dispersion. Ammonia water was added dropwise to this dispersion until the pH exceeded 4 by monitoring the pH with a pH meter. This slurry was filtrated using a Buchner funnel, and the resulting cake was washed by adding pure water to the cake. About half of the product was dried for 8 hours in an air drier set at 100°C, and the dried product was pulverized in a mortar to obtain a powder at an yield of 2.85 g. In the evaluation by ICP spectrometry, Ti content was 57.2% by weight, and Nb content was 3.3% by weight. Ignition loss including, for example, adsorption water was less than 0.5% by weight.

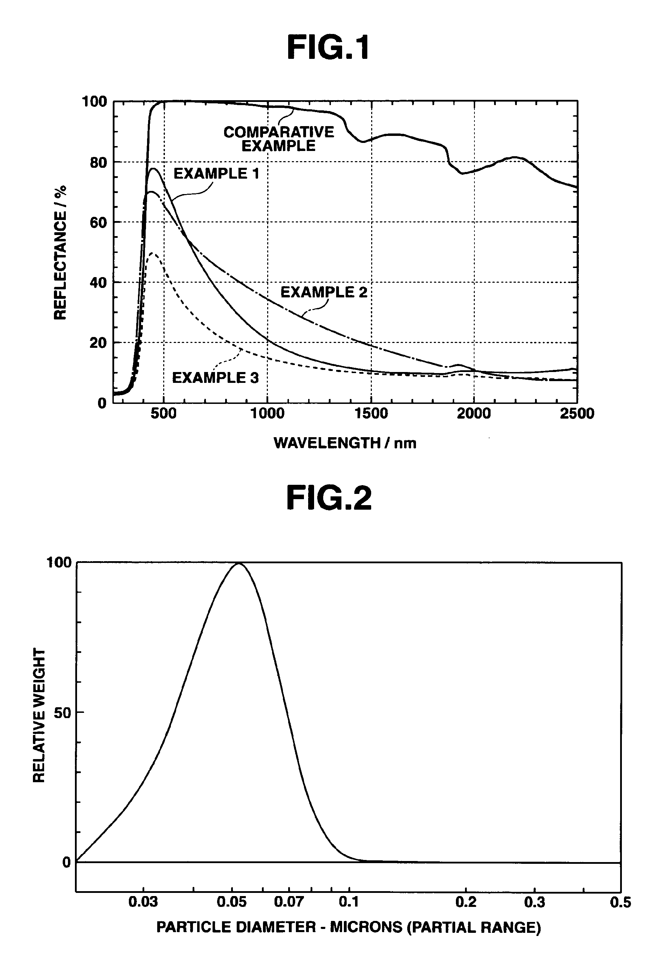

The diffuse reflectance spectrum of this powder was measured by using Shimadzu spectrophotometer W-31005 equipped with an integrating sphere (Shimadzu Corporation). The results are shown in FIG. 1. The reflectance was at its maximum at around 77% near 450 nm in the visible range, and the reflectance was up to 20% in the infrared range of 1000 to 2500 nm.

25 cm³ of pure water was added to the other half of the cake, and the cake was dispersed by sonication and stirring. The resulting dispersion did not show precipitation after several days. Particle size distribution of the titanium oxide in this dispersion was evaluated by using a disk centrifuge particle size distribution analyzer manufactured by CPS Instruments, Inc. The dispersion had an average particle size of 84 nm.

### Example 2

5.08 g of the titanium (IV) chloride solution (which was the same as the one used in Example 1), 13.60 g of titanium (IV) sulfate solution (Wako Pure Chemical Industries, Ltd., a Ti(SO₄)₂ content of 30% by weight), and 3.20 g of titanium (III) chloride solution (which was the same as the one used in Example 1) were mixed with 80 cm³ of pure water for dissolution. In the meanwhile, 0.54 g of niobium (V) chloride (which was the same as the one used in Example 1) was dissolved as in the case of Example 1, and this solution was mixed with the preliminarily prepared titanium solution. The resulting solution was divided in half, and after placing each half in the sealed vessel, the solution was heated to 160°C for 12 hours and allowed to cool naturally as in the case of Example 1.

The reaction product was collected and subjected to centrifugation, re-dispersion, neutralization, filtration, and washing as in the case of Example 1. About half of the product was dried at 100°C, and pulverized in a mortar to obtain a powder. The yield was 1.63 g. Ti content was 55.1% by weight, and Nb content was 5.9% by weight. Ignition loss was 0.6% by weight. The diffuse reflectance spectrum of this powder was measured by the same method as in Example 1. The results are shown in FIG. 1. The reflectance was at its maximum at around 70% near 430 nm in the visible range, and the reflectance was up to 35% in the infrared range of 1000 to 2500 nm, the reflectance decreasing insomuch as a long wavelength.

15 cm³ of pure water was added to the other half of the cake, and the cake was dispersed by stirring for 90 minutes with zirconia beads having a diameter of 0.4 mm in a polypropylene beaker equipped by agitator blade connected to a motor. This dispersion was evaluated for its particle size distribution by the same method as in Example 1. The results are shown in FIG. 2. The dispersion had an average particle size of 49 nm.

### Example 3

10.17 g of the titanium (IV) chloride solution (which was the same as the one used in Example 1) and 3.20 g of titanium (III) chloride solution (which was the same as the one used in Example 1) were mixed with 86 cm³ of pure water for dissolution. In the meanwhile, 0.72 g of tantalum (V) chloride (Mitsuwa Chemicals Co., Ltd., a purity of 99.9%) was dissolved as in the case of Example 1, and this solution was mixed with the preliminarily prepared titanium solution. The resulting solution was divided in half, and after placing each half in the sealed vessel, the solution was heated to 160°C for 12 hours and allowed to cool naturally as in the case of Example 1.

The reaction product was collected and subjected to centrifugation, re-dispersion, neutralization, filtration, and washing as in the case of Example 1. The product was dried at 100°C, and pulverized in a mortar to obtain a powder. The yield was 3.46 g. Ti content was 52.2% by weight, and Ta content was 10.9% by weight. Ignition loss was less than 0.5% by weight. The diffuse reflectance spectrum of this powder was measured by the same method as in Example 1. The results are shown in FIG. 1. The reflectance was at its maximum at around 50% near 430 nm in the visible range, and the reflectance was up to 15% in the infrared range of 1000 to 2500 nm. A part of this powder was dispersed in water by using a high-speed homogenizer, and then a ultrasound homogenizer. This dispersion was evaluated for its particle size distribution by the same method as in Example 1, and the average particle size was 75 nm.

### Comparative Example 1

10.77 g of titanium (IV) chloride solution (which was the same as the one used in Example 1) and was mixed with 42 cm³ of pure water for dissolution. This solution was placed in one sealed vessel which was the same as the one used in Example 1, and heated to 160°C for 12 hours and allowed to cool naturally.

The reaction product was collected and subjected to centrifugation, re-dispersion, neutralization, filtration, and washing as in the case of Example 1. The product was dried at 100°C, and pulverized in a mortar to obtain a powder. The yield was 3.11 g, and substantially pure TiO₂ was obtained. The diffuse reflectance spectrum of this powder was measured by the same method as in Example 1. The results are shown in FIG. 1. In the visible range, the reflectance was at its maximum in the range of 500 to 700 nm at around 100%, and the reflectance was as high as at least 70% in the infrared range of 1000 to 2500 nm.

Particle size distribution was measured by the same method as in Example 3, and the average particle size was 68 nm.

## Claims

1. A titanium oxide powder containing 0.2 to 25% by weight of niobium or tantalum, the powder having a diffuse reflectance spectrum such that the reflectance at the wavelength at which the reflectance is maximum in the visible range is at least 50%, and the reflectance in infrared range of 1000 to 2500 nm is equal to or less than half of the maximum reflectance of the visible range.

2. The titanium oxide powder according to claim 1 wherein the titanium oxide powder has an average particle size measured by centrifugation of up to 150 nm.

3. A dispersion of the titanium oxide powder of claim 1 in water or an organic solvent.

4. A method for preparing the titanium oxide powder of claim 1 comprising the steps of mixing a solution or dispersion of tetravalent titanium compound, a solution or dispersion of pentavalent niobium or tantalum compound, and a water-soluble reducing agent, and heating the mixture to a temperature of 100 to 250°C.

5. The method for preparing the titanium oxide powder according to claim 4 wherein the water-soluble reducing agent is a water-soluble compound of trivalent titanium.
